# FASCICULE DE BREVET EUROPEEN

(11) **EP 2 890 600 B1**
(45) Date de publication et mention de la délivrance du brevet: **16.08.2017**
(21) Numéro de dépôt: 13723880.4
(22) Date de dépôt: 26.04.2013
(51) Int. Cl.: B62D 21/11, B62D 35/02, B60K 15/063

(54) **SYSTEME DE PROTECTION D'UN SOUBASSEMENT POUR UN VEHICULE**
SYSTEM ZUM SCHUTZ DES UNTERBODENS EINES FAHRZEUGS
SYSTEM FOR PROTECTING THE UNDERBODY OF A VEHICLE

(30) Priorité: 29.08.2012 FR 1258061
(43) Date de publication de la demande: 08.07.2015
(73) Titulaire: Renault S.A.S., 92100 Boulogne-Billancourt (FR)
(72) Inventeur: COJOCARU, Laviniu, Dambovita (RO)
(86) Numéro de dépôt international: PCT/FR2013/050931
(87) Numéro de publication internationale: WO 2014/033376

(56) Documents cités:
- FR-A1- 2 914 267
- JP-A- 2007 106 306
- US-A- 5 813 491

## Description

### Domaine technique

La présente invention se rapporte à un système de protection d'un soubassement pour un véhicule qui comporte un réservoir de carburant logé dans une cavité du soubassement et un train de roues comprenant un berceau fixé sur le soubassement. Le document JP 2007 106 306 A divulgue un tel système.

### Etat de la technique

Un véhicule automobile comporte classiquement un soubassement qui constitue la partie inférieure de la structure de carrosserie du véhicule. Sur ce soubassement est fixé en particulier un berceau qui sert de support à un train de roues, par exemple un train de roues arrière. Dans le cas où le train de roue arrière est moteur, un différentiel est fixé sur le berceau et reçoit un mouvement par l'intermédiaire d'un arbre de transmission en provenance d'un groupe motopropulseur pour le transmettre aux roues par des arbres secondaires. L'arbre de transmission est placé dans une cavité que l'on nomme tunnel et qui s'étend dans une direction longitudinale dans le soubassement. Le tunnel est débouchant vers le bas du véhicule.

Le véhicule comporte en outre un réservoir de carburant placé lui aussi dans une cavité du soubassement et débouchant vers le bas du véhicule. En général, le réservoir est placé en avant du train de roue arrière.

Dans le cas des véhicules dits tous-terrains, destinés à circuler sur des terrains non aménagés, le soubassement est particulièrement exposé à des projections de matériaux en provenance du terrain, tels que de la boue, des graviers ou des cailloux. Ces projections risquent d'endommager les organes sous le soubassement, en particulier le réservoir, le différentiel et l'arbre de transmission.

L'invention vise donc à fournir un système de protection pour un soubassement de véhicule.

### Description de l'invention

Avec ces objectifs en vue, l'invention a pour objet un système de protection pour un soubassement de véhicule, le véhicule comportant un réservoir de carburant logé dans une cavité du soubassement et un train de roues comprenant un berceau fixé sur le soubassement, le système de protection étant caractérisé en ce qu'il comporte un support fixé sur le soubassement à l'opposé du train de roues par rapport au réservoir et un carénage s'étendant en regard du réservoir pour le couvrir au moins partiellement et s'appuyant sur le support et sur le berceau.

Le carénage crée un obstacle entre le réservoir et les projections possibles lors d'un roulage du véhicule sur un terrain non aménagé. Le réservoir est donc protégé de manière efficace. Selon l'invention, le berceau supporte un différentiel destiné à transmettre un mouvement aux roues du train de roues, le véhicule comportant en outre un arbre de transmission lié au différentiel et s'étendant le long du réservoir, le carénage couvrant en outre au moins partiellement l'arbre de transmission. Le même carénage assure aussi la protection du différentiel et de l'arbre de transmission.

De manière particulière, l'arbre de transmission s'étend entre le support et le soubassement. L'arbre de transmission est également protégé par le support. Le carénage est ainsi supporté complètement par le support, sans interruption pour le passage de l'arbre de transmission.

Selon un mode de réalisation, le support est soudé sur le soubassement. Il est ainsi parfaitement intégré au soubassement et peut bénéficier de tous les traitements de protection contre la corrosion réalisés sur la carrosserie.

Selon un perfectionnement, le carénage comporte des nervures s'étendant dans une direction longitudinale entre le support et le berceau. Les nervures confèrent une plus grande rigidité au carénage, en particulier dans le sens de la flexion entre le support et le berceau. La résistance aux chocs est également améliorée.

De manière particulière, le carénage est fixé par des moyens de fixation par vissage sur le support et sur le berceau. On peut ainsi fixer le carénage dans la phase de montage mécanique, en particulier après la mise en place du berceau, du différentiel et de l'arbre de transmission. Le carénage est également amovible, ce qui permet de le remplacer facilement s'il est abîmé.

Selon une disposition particulière, le berceau comporte deux traverses et des tirants s'étendant entre les deux traverses, le carénage étant fixé sur les tirants. On bénéficie opportunément de la position des tirants sur lesquels le carénage peut être fixé facilement, par exemple par vissage.

Selon un autre perfectionnement, le carénage comporte au moins une griffe faisant saillie dans la direction longitudinale, la griffe étant agencée par venir en prise avec le support pour soutenir le carénage pendant une opération de montage. Ainsi, le carénage est soutenu à son extrémité proche du support pendant l'opération de montage, L'opérateur n'a besoin de soutenir le carénage que près de l'autre extrémité pour le fixer au berceau. Pour la fin des opérations de fixation sur le support, l'opérateur n'a pas besoin de soutenir le carénage.

### Brève description des figures

L'invention sera mieux comprise et d'autres particularités et avantages apparaîtront à la lecture de la description qui va suivre, la description faisant référence aux dessins annexés parmi lesquels :
- la figure 1 est une vue en perspective et en éclaté d'un système de protection conforme à l'invention ;
- la figure 2 est une vue en perspective d'un soubassement, un carénage du système de protection de la figure 1 étant représenté en traits mixtes ;
- la figure 3 est une vue en perspective et en éclaté du système de la figure 1 ;
- la figure 4 est une vue d'un berceau seul ;
- la figure 5 est une vue de détail de la liaison entre un support et le carénage.

### DESCRIPTION DETAILLEE

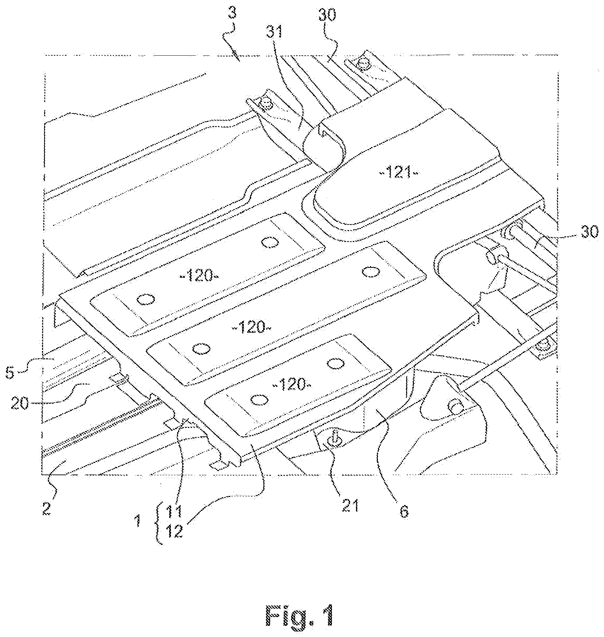

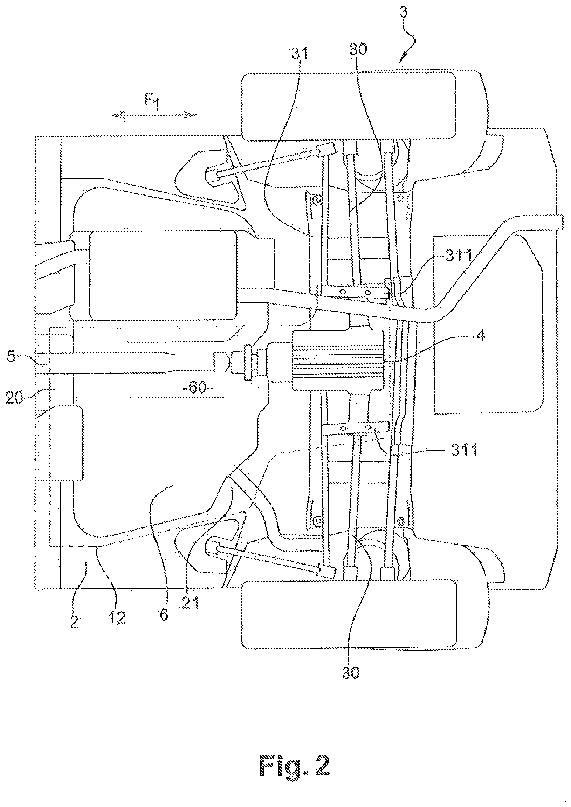

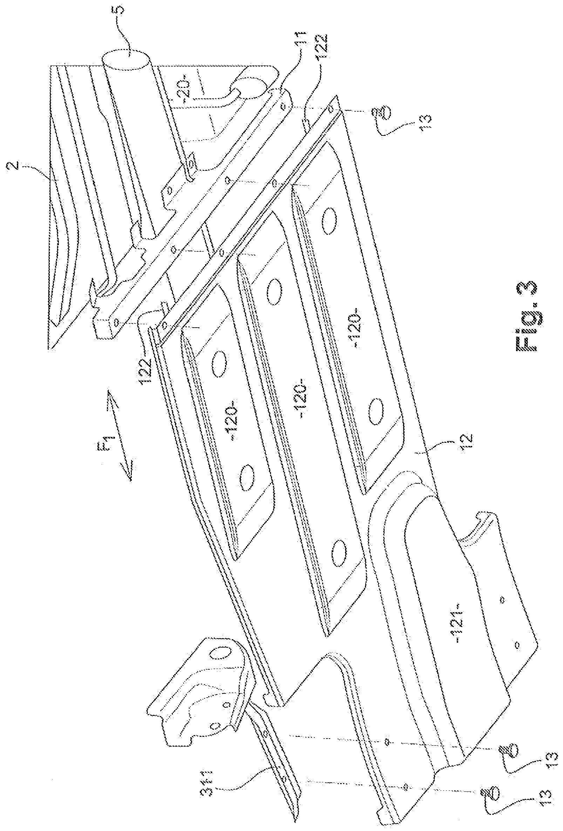

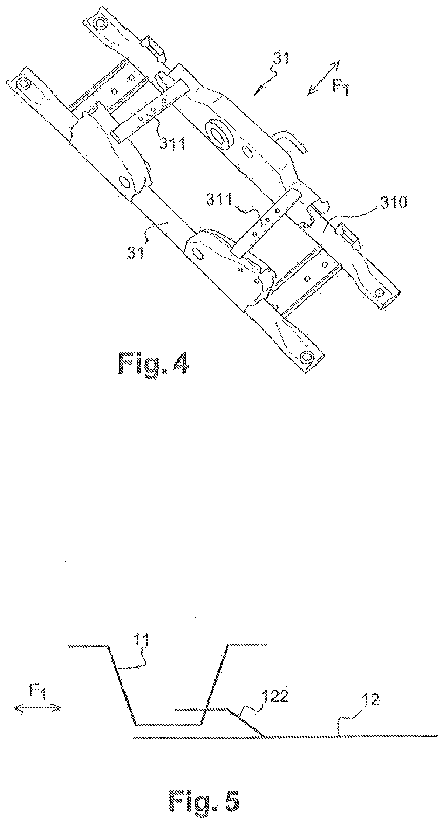

Un véhicule automobile équipé d'un système de protection 1 selon l'invention est représenté sur les figures 1 à 3 et comporte classiquement un soubassement 2 qui constitue la partie inférieure de la structure de carrosserie du véhicule. Sur ce soubassement 2 est fixé en particulier un berceau 31, représenté seul sur la figure 4, qui sert de support à un train de roues 3 arrière moteur. Un différentiel 4 est fixé sur le berceau 31 et reçoit un mouvement par l'intermédiaire d'un arbre de transmission 5 en provenance d'un groupe motopropulseur, non représenté, pour le transmettre aux roues par des arbres secondaires 30. L'arbre de transmission 5 est placé dans une cavité que l'on nomme tunnel 20 qui s'étend dans une direction longitudinale dans le soubassement 2. Le tunnel 20 est débouchant vers le bas du véhicule. Le berceau 31 comporte en particulier deux traverses 310 s'étendant dans une direction transversale, perpendiculaire à la direction longitudinale, et des tirants 311 s'étendant entre les deux traverses 310 dans la direction longitudinale F1.

Le véhicule comporte en outre un réservoir 6 de carburant placé lui aussi dans une cavité 21 du soubassement 2 et débouchant vers le bas du véhicule. Le réservoir 6 est placé en avant du berceau 31. Le réservoir 6 comporte une rainure 60 dans le prolongement du tunnel 20 pour le passage de l'arbre de transmission 5.

Selon l'invention, le système de protection 1 comporte un support 11 et un carénage 12. Le support 11 est fixé sur le soubassement 2 à l'opposé du train de roues 3 par rapport au réservoir 6, c'est-à-dire à l'avant du réservoir 6. Le carénage 12 s'étend en regard du réservoir 6 et au moins partiellement en regard de l'arbre de transmission 5 pour les couvrir en s'appuyant sur d'une part sur le support 11 et d'autre part sur le berceau 31 et plus particulièrement sur les tirants 311 du berceau 31. La fixation du carénage 12 sur le support 11 et sur les tirants 311 est réalisée par des moyens de fixation par vissage, à l'aide de vis 13 en prise directement avec le support 11 ou le berceau 31 ou par l'intermédiaire d'écrous sertis ou soudés, non représentés.

Le support 11 s'étend dans une direction transversale. Il s'étend le long de la cavité 21 du réservoir 6 et passe d'un bord à l'autre du tunnel 20. Ainsi, l'arbre de transmission 5 s'étend entre le support 11 et le tunnel 20. Le support 11 est soudé sur le soubassement 2.

Le carénage 12 comporte des nervures 120 s'étendant dans la direction longitudinale F1 de manière à augmenter sa rigidité. Il comporte également une bosse 121 au droit du différentiel 4 afin de protéger également la partie saillante du différentiel 4.

Le carénage 12 comporte en outre deux griffes 122 pour faciliter son montage. Les griffes 122 font saillie dans la direction longitudinale F1 et sont agencées pour venir en prise avec le support 11 pour soutenir le carénage 12 pendant l'opération de montage. Ainsi le carénage 12 est partiellement soutenu pendant que l'opérateur met en place les vis 13 sur les tirants 311, comme le montre la figure 5.

## Revendications

1. Système de protection pour un soubassement (2) de véhicule, le véhicule comportant un réservoir (6) de carburant logé dans une cavité (21) du soubassement (2) et un train de roues (3) comprenant un berceau (31) fixé sur le soubassement (2), le système de protection (1) étant **caractérisé en ce qu'**il comporte un support (11) fixé sur le soubassement (2) à l'opposé du train de roues (3) par rapport au réservoir (6), à l'avant de ce dernier, et un carénage (12) s'étendant en regard du réservoir (6) pour le couvrir au moins partiellement et s'appuyant sur le support (11) et sur le berceau (31) et **en ce que** le berceau (31) supporte un différentiel (4) destiné à transmettre un mouvement aux roues du train de roues (3), le véhicule comportant en outre un arbre de transmission (5) lié au différentiel (4) et s'étendant le long du réservoir (6), le carénage (12) couvrant en outre au moins partiellement l'arbre de transmission (5).

2. Système selon la revendication 1, dans lequel l'arbre de transmission (5) s'étend entre le support (11) et le soubassement (2).

3. Système selon la revendication 1, dans lequel le support (11) est soudé sur le soubassement (2).

4. Système selon la revendication 1, dans lequel le carénage (12) comporte des nervures s'étendant dans une direction longitudinale (F1) entre le support (11) et le berceau (31).

5. Système selon la revendication 1, dans lequel le carénage (12) est fixé par des moyens de fixation (13) par vissage sur le support (11) et sur le berceau (31).

6. Système selon la revendication 1, dans lequel le berceau (31) comporte deux traverses (310) et des tirants (311) s'étendant entre les deux traverses (310), le carénage (12) étant fixé sur les tirants (311).

7. Système selon la revendication 1, dans lequel le carénage (12) comporte au moins une griffe (122) faisant saillie dans la direction longitudinale (F1), la griffe (122) étant agencée pour venir en prise avec le support (11) pour soutenir le carénage (12) pendant une opération de montage.

## Patentansprüche

1. Schutzsystem für einen Unterboden (2) eines Fahrzeugs, wobei das Fahrzeug einen Kraftstofftank (6), der in einem Hohlraum (21) des Unterbodens (2) untergebracht ist, und einen Radsatz (3) aufweist, der eine am Unterboden (2) befestigte Halterung (31) enthält, wobei das Schutzsystem (1) **dadurch gekennzeichnet ist, dass** es einen am Unterboden (2) entgegengesetzt zum Radsatz (3) bezüglich des Tanks (6) vor diesem befestigten Träger (11) und eine Verkleidung (12) aufweist, die sich gegenüber dem Tank (6) erstreckt, um ihn zumindest teilweise zu bedecken, und die sich auf den Träger (11) und die Halterung (31) auflegt, und dass die Halterung (31) ein Differentialgetriebe (4) trägt, das dazu bestimmt ist, eine Bewegung an die Räder des Radsatzes (3) zu übertragen, wobei das Fahrzeug außerdem eine Antriebswelle (5) aufweist, die mit dem Differentialgetriebe (4) verbunden ist und sich entlang des Tanks (6) erstreckt, wobei die Verkleidung (12) außerdem mindestens teilweise die Antriebswelle (5) bedeckt.

2. System nach Anspruch 1, wobei die Antriebswelle (5) sich zwischen dem Träger (11) und dem Unterboden (2) erstreckt.

3. System nach Anspruch 1, wobei der Träger (11) an den Unterboden (2) geschweißt ist.

4. System nach Anspruch 1, wobei die Verkleidung (12) Rippen aufweist, die sich in einer Längsrichtung (F1) zwischen dem Träger (11) und der Halterung (31) erstrecken.

5. System nach Anspruch 1, wobei die Verkleidung (12) durch Schraubbefestigungseinrichtungen (13) am Träger (11) und an der Halterung (31) befestigt wird.

6. System nach Anspruch 1, wobei die Halterung (31) zwei Querträger (310) und Zugstangen (311) aufweist, die sich zwischen den zwei Querträgern (310) erstrecken, wobei die Verkleidung (12) an den Zugstangen (311) befestigt ist.

7. System nach Anspruch 1, wobei die Verkleidung (12) mindestens einen Zapfen (122) aufweist, der in Längsrichtung (F1) vorsteht, wobei der Zapfen (122) angeordnet ist, um mit dem Träger (11) in Eingriff zu kommen, um die Verkleidung (12) während eines Montagevorgangs zu stützen.

## Claims

1. Protection system for a vehicle underbody (2), the vehicle comprising a fuel tank (6) seated in a cavity (21) in the underbody (2) and a wheel set (3) including a cradle (31) attached to the underbody (2), the protection system (1) being **characterized in that** it includes a supporting element (11) attached to the underbody (2) opposite the wheel set (3) in relation to the tank (6), in front of this latter, and a fairing (12) extending facing the tank (6) such as to cover same at least partially, and resting on the supporting element (11) and on the cradle (31) and **in that** the cradle (31) holds a differential (4) intended to transmit motion to the wheels in the wheel set (3), the vehicle also having a transmission shaft (5) linked to the differential (4) and extending along the tank (6), the fairing (12) also at least partially covering the transmission shaft (5).

2. System according to Claim 1, wherein the transmission shaft (5) extends between the supporting element (11) and the underbody (2).

3. System according to Claim 1, wherein the supporting element (11) is welded to the underbody (2).

4. System according to Claim 1, wherein the fairing (12) includes ribs extending in a longitudinal direction (F1) between the supporting element (11) and the cradle (31).

5. System according to Claim 1, wherein the fairing (12) is attached using attachment means (13) by screwing to the supporting element (11) and to the cradle (31).

6. System according to Claim 1, wherein the cradle (31) has two cross members (310) and tie rods (311) extending between the two cross members (310), the fairing (12) being attached to the tie rods (311).

7. System according to Claim 1, wherein the fairing (12) has at least one claw (122) protruding in the longitudinal direction (F1), the claw (122) being arranged to engage with the supporting element (11) to hold the fairing (12) during assembly.
